# EUROPÄISCHE PATENTANMELDUNG

(11) **EP 1 977 845 A2**
(43) Veröffentlichungstag der Anmeldung: **08.10.2008**
(21) Anmeldenummer: 08010493.8
(22) Anmeldetag: 05.09.2002
(51) Int. Cl.: B23C 5/22, B23C 5/06

(54) **Fräswerkzeug mit einer Anzahl von Schneidplatten**

(30) Priorität: 06.09.2001 DE 20114783 U
(62) Teilanmeldung aus: 08009433.7
(71) Anmelder: KENNAMETAL INC., Latrobe, PA 15650-0231 (US)
(72) Erfinder: Schuffenhauer, Michael, 90765 Fürth (DE); Kranz, Steffen, 90766 Fürth (DE); Boguth, Werner, 90617 Puschendorf (DE)
(74) Vertreter: Tergau & Pohl Patentanwälte

(57) **Zusammenfassung**

Die Erfindung betrifft ein Fräswerkzeug (17) mit einer Anzahl von an einem Werkzeugträger (16) umfangsseitig verteilt angeordneten Schneidplatten (1) mit einem Grundkörpers (2) mit gegenüberliegenden ebenen Grundfläche (3) sowie mit Seitenflächen (4), die jeweils einen kegelmantelförmigen Flächenabschnitt (4a) und einen planaren Flächenabschnitt (4b) aufweisen, wobei die Schnittkanten (5) einen in der Ebene der Grundfläche (3) liegenden außermittigen bogenförmigen Verlauf aufweisen, und wobei jeder Schneidplatte (1) ein Plattensitz (20) mit einer der jeweiligen Grundfläche (3) zugewandten Auflagefläche (23) und einer der jeweiligen Seitenfläche (4) zugewandten Anlagefläche (24) sowie mit einer Aufnahmeöffnung (26) zur Aufnahme eines als axialer Anschlag für die Schneidplatte (1) wirksamen Anschlagstiftes (25) zugeordnet ist.

## Beschreibung

Die Erfindung bezieht sich auf ein Fräswerkzeug mit einer Anzahl von Schneidplatten gemäß dem Oberbegriff des Anspruchs 1. Ein Fräswerkzeug mit derartigen Schneidplatten ist beispielsweise aus der JP-A-09 23 4619 bekannt. Unter Schneidplatte wird hierbei eine Wendeschneidplatte und unter Fräswerkzeug insbesondere ein Schlichtfräser verstanden.

Infolge der steigenden Anforderungen an technische Bauteile oder Werkstücke, die durch spanende Bearbeitung hergestellt werden, besteht insbesondere die Forderung nach einer verbesserten Oberflächengüte. Zur Erfüllung dieser Forderung nach glatten, möglichst rillen- und riefenfreien geschlichteten Oberflächen, insbesondere mit einer Rauhigkeit (Rz) kleiner 6µm und einer Welligkeit (Wₜ) kleiner 3µm, sind auch besondere Anforderungen an die zum Einsatz kommenden Werkzeuge zu stellen. Besondere Bedeutung haben hierbei die Geometrie der Schneidkante, die Auswahl des Schneidstoffes und die Wahl der Bearbeitungsparameter sowie die exakt definierte Position der Schneidkante zur zu bearbeitenden Oberfläche.

In einem derartigen Fräswerkzeug, insbesondere in einem sogenannten Schlichtfräser zur Erzeugung besonders glatter Oberflächen, üblicherweise eingesetzte Schneid- oder Wendeschneidplatten weisen im Wesentlichen zwei einander gegenüberliegende Grundflächen auf, die sowohl als Auflageflächen als auch als Freiflächen für die jeweils im Einsatz befindliche Hauptschneide Verwendung finden. An einer solchen Wendeschneidplatte sind umfangsseitig vier planare Flächen angeordnet, die im Einbauzustand im Werkzeug als Plattenanlagefläche und für die im Eingriff befindliche Hauptschneide als Spanfläche verwendet werden. Für die dann ebenfalls im Eingriff befindliche Nebenschneide dienen diese planaren Flächen jeweils als Nebenschneidenfläche.

Bezüglich der die Hauptschneide bildenden Schneidkante kann diese linienförmig und im Wesentlichen planparallel zur zu bearbeitenden Oberfläche sein. Nachteilig hierbei ist die Empfindlichkeit gegenüber Winkelfehlern bei der Positionierung dieser linienförmigen Schneidkante zur Werkstückoberfläche, so dass ein bevorzugter Angriff lediglich eines Schneidkantenendes an der zu bearbeitenden Oberfläche praktisch unvermeidbar und damit die gestellte Forderung nach einer verbesserten Oberflächengüte praktisch nicht erreichbar ist.

Alternativ zu einer linienförmigen und damit geraden Schneidkante kann diese gemäß z. B. der EP 0 370 494 B1 auch einen kreisförmigen oder ellipsoiden Krümmungsverlauf aufweisen. Eine in Bezug auf die zu bearbeitende Oberfläche kreisförmige oder ellipsoide Schneidkante bedingt aufgrund der ausgehend von der Schneidkantenmitte in Richtung der beiden Schneidkantenenden gleichmäßigen Krümmungswerte unerwünscht kleine Fehlertoleranzen gegenüber Winkelfehlern mit zunehmendem Schneidkörperradius. Bei einer kreisförmig gekrümmten Schneidkante ist zudem die Verschlechterung der Oberflächenqualität mit abnehmendem Radius der Schneidkante besonders nachteilig.

Eine Schneidplatte, deren Spanfläche aus einem konvex gekrümmten Flächenbereich und einem planaren Flächenabschnitt besteht, ist aus der DE 44 46 824 A1 bekannt. Dort ist die Krümmung des konvexen Flächenabschnitts derart eingestellt, dass der Abstand zwischen der Schneidkante und einer deren Endpunkte verbindenden imaginären Linie in der Mitte der Schneidkante maximal ist. Anders ausgedrückt ist die Schneidkante bezüglich ihrer Endpunkte etwa symmetrisch gekrümmt. Die gekrümmte Schneidkante der bekannten Schneidplatte dient nicht der Erzeugung einer glatten Werkstückoberfläche, zumal die bekannte Schneidplatte am Umfang des Fräswerkzeugs angebracht ist, und die Hauptschneide somit nicht parallel zur Planfläche des Werkstücks ausgerichtet ist. Zur Glättung der Werkstückoberfläche dient bei der bekannten Schneidplatte eine kurze Nebenschneide. Eine Schneidplatte mit außermittig bogenförmiger Schneidkante ist aus der eingangs genannten JP-A-09 23 4619 bekannt.

Bezüglich der Positionierung einer solchen Schneid- oder Wendeschneidplatte im Trägersystem bestehen prinzipiell zwei Möglichkeiten. So kann die Schneid- bzw. Wendeschneidplatte unter Unveränderbarkeit der Position der Schneidkante zur Oberfläche im Träger fixiert oder aber derart mit diesem verbunden werden, dass eine nachträgliche Lageverschiebung der Schneidkante in Bezug auf die zu bearbeitende Oberfläche möglich ist. Nachteilig bei der Lagefixierung der Schneidplatte mit unveränderbarer Schneidkantenposition ist die Forderung nach einem sehr präzisen Werkzeugträger für die Schneidplatte. Demgegenüber ist bei einer Schneidplattenverbindung mit nachträglicher Lageverschiebung der Schneidkante eine erhöhte Anfälligkeit des Gesamtsystems hinsichtlich einer Lageveränderung der Schneidkante durch äußere Einflüsse nachteilig.

Der Erfindung liegt die Aufgabe zugrunde, ein Fräswerkzeug, insbesondere einen Schlichtfräser, der eingangs genannten Art anzugeben, mit dem möglichst geringe Wellen- oder Profiltiefen im zu bearbeitenden Werkstück und damit eine besonders glatte Oberfläche erzielt wird. Insbesondere soll eine besonders hohe Oberflächengüte des zu bearbeitenden Werkstücks ermöglicht werden.

Die genannte Aufgabe wird erfindungsgemäß gelöst durch die Merkmale des Anspruchs 1. Das erfindungsgemäße Fräswerkzeugs weist eine Anzahl von Schneidplatten auf, die an einem Werkzeugträger im Bereich dessen Schlichtmesserkopfes umfangsseitig verteilt angeordnet sind. Der einer Schneidplatte zugeordnete Plattensitz im Werkzeugträger des Fräswerkzeugs weist zusätzlich zu einer der jeweiligen Grundfläche der Schneidplatte zugewandten Auflagefläche und einer der jeweiligen Seitenfläche der Schneidplatte zugewandten Anlagefläche eine Aufnahmeöffnung zur Aufnahme eines Anschlagstiftes auf, der als axialer Anschlag für die Schneidplatte dient. Dadurch, dass dieser Anschlagstift erst nach der Bearbeitung des Plattensitzes montiert wird, können die Auflagefläche und die Anlagefläche des Plattensitzes gleichzeitig in einem Arbeitsschritt bearbeitet werden. Dadurch ist es möglich eine Planlaufgenauigkeit von 10µm im Werkzeugträger zu erzeugen.

Die vorzugsweise doppelseitigen Wendeschneidplatten sind dabei derart mit dem Werkzeugträger verbunden, dass die Schneidkante der jeweiligen Schneidplatte in der vorgesehenen Position fixiert ist, eine nachträgliche Verschiebung der Schneidkante also nicht mehr möglich ist. Dabei ist zweckmäßigerweise die am Umfangsbereich der 0°-Mittellinie des Werkzeugträgers vorgesehene Schneidplatte gegenüber dieser Mittellinie um einen Winkel von (5 ± 3)° versetzt angeordnet.

Die Schneidplatten weisen Seitenflächen mit jeweils einem kegelförmigen und einem planaren Flächenabschnitt auf. Der kegelförmige Flächenabschnitt und die diesem zugewandte Grundfläche stehen unter Bildung einer Schneidkante zueinander in einem spitzen Winkel, während der planare Flächenabschnitt mit der gegenüberliegenden Grundfläche einen stumpfen Winkel bildet. Der kegelmantelförmige Flächenabschnitt hebt sich unter Bildung eines außermittigen bogenförmigen Verlaufs der Schneidkante aus der Seitenfläche asymmetrisch ballig heraus. Hierzu ist die Achse des kegelmantelförmigen Flächenabschnitts gegenüber der zentralen Achse der Schneidplatte versetzt, wobei der Krümmungsradius in Bezug auf die Bogenlänge der Schneidkante sehr groß, d.h. praktisch kaum sichtbar ist. Der Bogenverlauf der Schneidkante liegt dabei in der Ebene der Grundfläche.

In vorteilhafter Ausgestaltung weist die Schneidplatte zweckmäßigerweise keilförmige Eckfasenflächen auf. Diese bilden sowohl mit dem kegelförmigen Flächenabschnitt und mit dem planaren Flächenabschnitt als auch mit der der Schneidkante abgewandten Grundfläche jeweils einen stumpfen Winkel. Durch eine derartige keilförmige Eckfasenfläche wird vorteilhafterweise einerseits ein weicher Anschnitt erreicht und andererseits eine Verkürzung der gegenüberliegenden Schneidkante vermieden.

Bei der Wendeschneidplatte sind vorteilhafterweise jeweils zwei zu jeder Grundfläche symmetrisch angeordnete Eckfasenflächen vorgesehen. Dabei bildet jede Eckfasenfläche mit einer der Grundflächen und einer der Seitenflächen jeweils einen stumpfen Winkel, während diese Eckfasenfläche zu dem kegelmantelförmigen Flächenabschnitt der benachbarten Seitenfläche unter Bildung einer ellipsoiden Kante in einem spitzen Winkel steht. Die Wendeschneidplatte zeichnet sich zudem durch einen rhombusförmigen Grundkörper aus, dessen einander gegenüberliegenden Grundflächen gegeneinander um einen Winkel von (97 ± 2)°, vorzugsweise 97°, verdreht sind.

Die mit der Erfindung erzielten Vorteile bestehen vornehmlich darin, dass insbesondere durch die Kombination der außermittigen Ballung des kegelförmigen Flächenabschnitts der jeweiligen Seitenfläche der Schneidplatte - und damit durch die gewölbte Schneidkante mit dezentralem Wölbungsmaximum oder Scheitelpunkt - sowie der Anordnung der Schneidplatte innerhalb des Werkzeugträgers vor dessen 0°-Mittellinie infolge eines dadurch bedingten vergrößerten Radius eine besonders hohe Oberflächengüte der zu bearbeitenden Oberfläche eines Werkstücks erzielt wird. Insbesondere sind mit einem solchen, als Schlichtfräser verwendeten Werkzeug etwa um den Faktor zwei (2) geringere verbleibende Wellen- oder Profiltiefen erreichbar als bei mit bisherigen Schlichtfräsern bearbeiteten Oberflächen.

Nachfolgend werden Ausführungsbeispiele der Erfindung anhand einer Zeichnung näher erläutert. Darin zeigen:
- Fig. 1: in perspektivischer Darstellung ein Fräswerkzeug mit einer Mehrzahl von Wendeschneidplatten,
- Fig. 2: das Fräswerkzeug in einer Draufsicht,
- Fig. 3: eine Schnittdarstellung des Fräswerkzeugs entlang der Linie III in Fig. 2,
- Fig. 4: einen Ausschnitt IV aus Fig. 2 in größerem Maßstab, und
- Fig. 5: in einem Ausschnitt gemäß Fig. 4 einen Plattensitz im Werkzeugträger-Messerkopf des Fräswerkzeugs,
- Fig. 6: in perspektivischer Darstellung eine als Wendeschneidplatte ausgeführte Schneidplatte mit vier jeweils einen asymmetrischen kegelförmigen und einen planaren Flächenabschnitt aufweisenden Seitenflächen, und
- Fig. 7: die Schneidplatte in einer Seitenansicht.

Einander entsprechende Teile sind in allen Figuren mit den gleichen Bezugszeichen versehen.

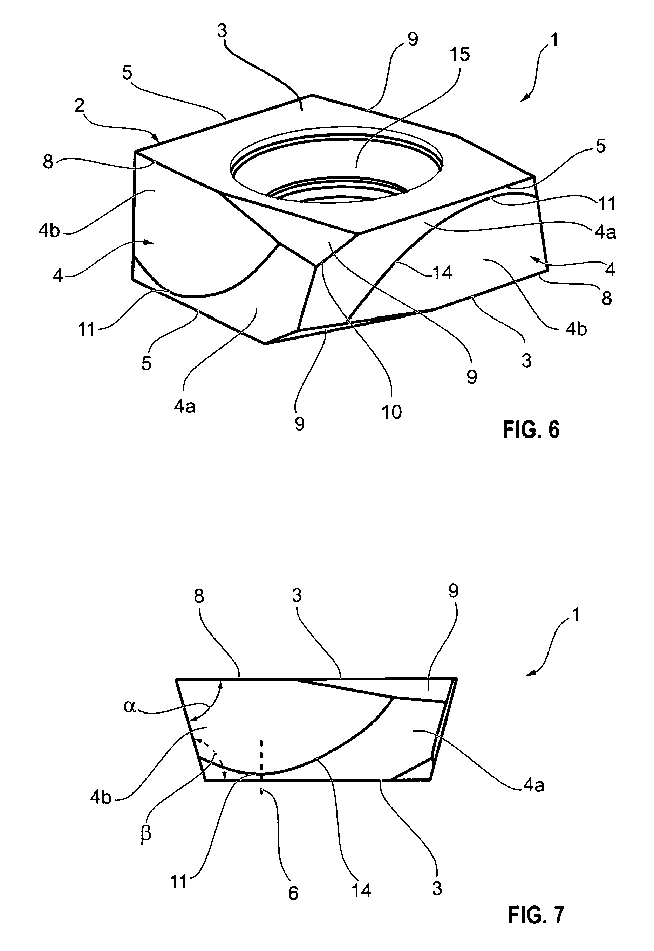

Die in Fig. 6 und 7 dargestellte Schneid- oder Wendeschneidplatte 1 umfasst einen Grundkörper 2 mit zwei einander gegenüberliegenden ebenen Grundflächen 3. Die Wendeschneidplatte 1 weist zudem vier Seitenflächen 4 mit jeweils einem kegelmantelförmigen Flächenabschnitt 4a und einem planaren Flächenabschnitt 4b auf. Der jeweilige kegelmantelförmige Flächenabschnitt 4a sowie die diesem zugewandte Grundfläche 3 stehen zueinander in einem spitzen Winkel α und bilden jeweils eine Schneidkante 5. Der planare Flächenabschnitt 4b bildet mit der gegenüberliegenden Grundfläche 3 einen stumpfen Winkel β.

Die Wendeschneidplatte 1 weist einen rhombusförmigen Grundkörper 2 mit demnach vier Schneidkanten 5 auf. Dabei sind die geometrische Form und die Abmessungen der beiden Grundflächen 3 zumindest nahezu identisch, jedoch um 97° gegeneinander verdreht. Die Wendeschneidplatte 1 weist somit vier planare Flächenabschnitte 4b und vier kegelmantelförmige Flächenabschnitte oder Kegelmantelflächen 4a auf. Jeweils ein planarer Flächenabschnitt 4b und ein kegelmantelförmiger Flächenabschnitt 4a stellen dabei eine Seitenfläche 4 des Grundkörpers 2 dar. Jeweils gegenüberliegende kegelmantelförmige Flächenabschnitte 4a bilden mit einer der Grundflächen 3 einen spitzen Winkel α. Die dadurch entstehenden Kegelschnitte stellen die Schneidkanten 5 dar, die demzufolge auch gegenüberliegend sind. Mit der jeweils anderen Grundfläche 3 weisen die kegelmantelförmigen Flächenabschnitte 4a keine Schnittlinie auf. Somit sind je Grundfläche 3 jeweils zwei Schneidkanten 5 vorhanden.

Die jeweils gegenüberliegenden planaren Flächenabschnitte 4b der Seitenflächen 4 bilden mit der Grundfläche 3 einen stumpfen Winkel β, wobei die dadurch entstehende Kante 8 keine Schneidkante ist. Mit der jeweils anderen Grundfläche 3 weisen diese planaren Flächenabschnitte 4b keine gemeinsame Kante auf. Die jeweils gegenüberliegenden planaren Flächenabschnitte 4b und die gegenüberliegenden kegelmantelförmigen Flächenabschnitte 4a der jeweiligen Seitenfläche 4 sind gegeneinander geneigt.

Die Wendeschneidplatte 1 weist vier Eckfasenflächen 9 auf. Dabei sind jeweils zwei dieser Eckfasenflächen 9 symmetrisch verteilt zu jeder der Grundflächen 3 angeordnet. Die Eckfasenfläche 9 ist jeweils zwischen einer Grundfläche 3 und einem planaren Flächenabschnitt 4b aufgespannt. Dabei bildet die jeweilige Eckfasenfläche 9 mit der Grundfläche 3 sowie mit einem kegelmantelförmigen Flächenabschnitt 4a und einem planaren Flächenabschnitt 4b einen stumpfen Winkel, während diese Eckfasenfläche 9 mit dem anderen, nicht gegenüberliegenden kegelmantelförmigen Flächenabschnitt 4a einen spitzen Winkel bildet. Eine dadurch entstehende Kante 10 ist ellipsoid geformt und findet insbesondere als Ecken- oder Anschnittphase Verwendung.

Die jeweilige Schneidkante 5 weist einen in der Ebene der Grundfläche 3 liegenden Bogenverlauf mit außermittiger- und damit asymmetrischer - Wölbung des kegelmantelförmigen Flächenabschnitts 4a auf. Wie in Fig. 7 angedeutet, verläuft die Kegelachse 6 des kegelmantelförmigen Flächenabschnitts 4a unter Bildung des außermittigen bogenförmigen Verlaufs der Schnittkante 5 parallel versetzt zur zentralen Plattenachse. Der kegelmantelförmige Flächenabschnitt 4a und der planare Flächenabschnitt 4b jeder Seitenfläche 4 der Wendeschneidplatte 1 sind unter verschiedenen Winkeln angeordnet. Dabei ist der Winkelunterschied derart gewählt, dass eine durch die Verschneidung der beiden Flächenabschnitte 4a,4b entstehende Schnittkante 14 mit deren Scheitelpunkt 11 der jeweiligen Schneidkante 5 zugewandt ist. In Bezug auf die zu bearbeitende Oberfläche stellt der im Scheitelpunkt 11 liegende Treffpunkt zweier unterschiedlich langer Kantensegmente 5a, 5b der jeweiligen Schneidkante 5 den höchsten Punkt dar. Aufgrund des sehr großen Krümmungsradius in Bezug auf die Bogenlänge der Schneidkante 5 ist dieser bogenförmige Verlauf der Schneidkante 5 bzw. deren Krümmung in den Darstellungen praktisch nicht sichtbar.

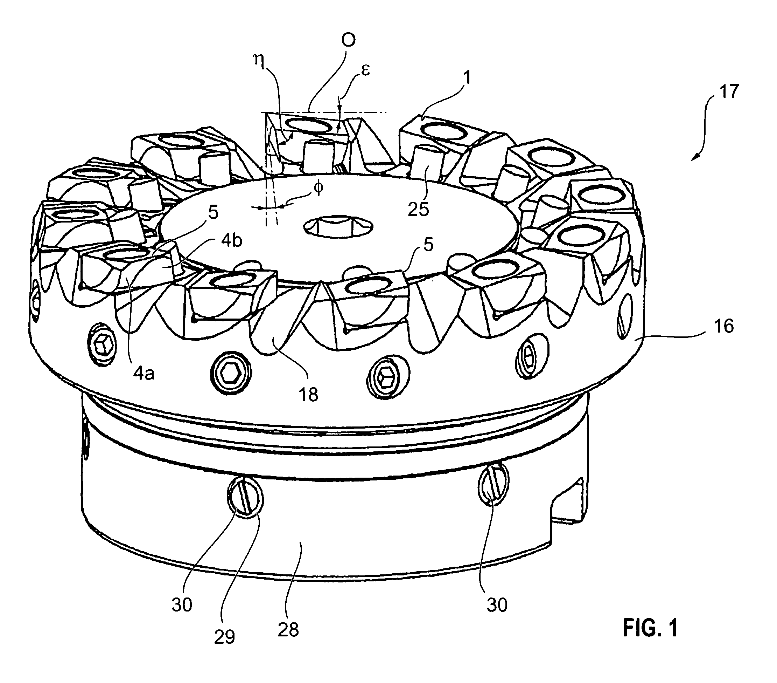

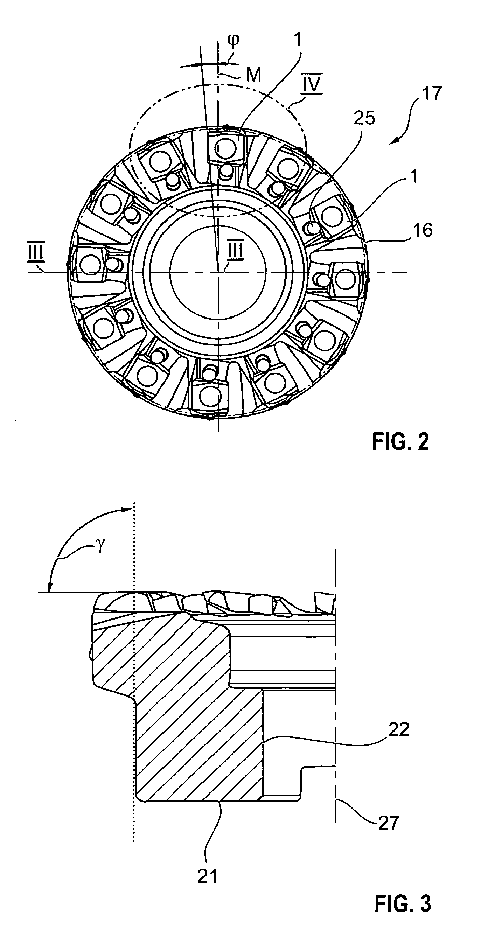

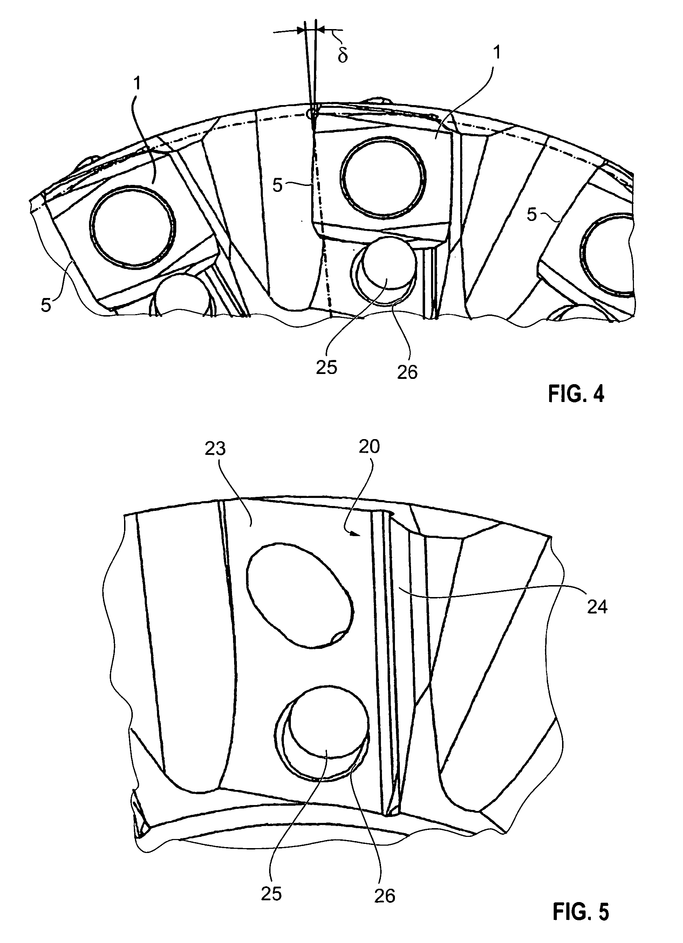

Ein weiteres Merkmal der Wendeschneideplatte 1 ist eine unterschiedliche Neigung der umfangsseitig angeordneten kegelmantelförmigen Flächenabschnitte 4a einerseits und der ebenfalls umfangsseitig angeordneten planaren Flächenabschnitte 4b andererseits gegenüber der jeweiligen Grundfläche 3. Dabei werden insgesamt durch den negativen Neigungswinkel δ Fig. 4) ein besonders weiches Anschnittverhalten erzeugt und die radiale Spanabfuhr begünstigt. Zudem ist die Form der Schneidkante 5 der doppelseitigen Wendeschneidplatte 1 an die beschriebenen geometrischen Bedingungen hinsichtlich des Einstellwinkels γ (Fig. 3) und des Neigungswinkels δ optimal angepasst, so dass bei einer Abweichung der Parameter von den genannten Werten eine Verschlechterung des Oberflächenbildes und der Oberflächenparameter der zu bearbeitenden Oberfläche O (Fig. 1) zu erwarten ist.

Im Zentrum der Wendeschneidplatte 1 ist eine durchgehende kreisrunde Öffnung 15 vorgesehen, die zur besonders einfachen Halterung im Werkzeugträger 16 (Fig. 1) mittels einer Spannbolzen- und Schraubbefestigung dient. Durch die Gestaltungsform des Grundkörpers 2 ist somit eine Wendeschneidplatte 1 geschaffen, die die Forderung nach einer besonders glatten und insbesondere rillen- und riefenfreien Oberfläche erfüllt. Die Gestaltung der äußeren Form der Schneidplatte 1 in der dargestellten Form gewährleistet eine Linienberührung zwischen dieser Schneidplatte 1 und den Plattensitzanlageflächen des Werkzeugträgers 16 des in den Figuren 1 bis 5 dargestellten Fräswerkzeugs oder Schlichtfräsers 17.

Bei dem in Fig. 1 dargestellten Fräswerkzeug oder Schlichtfräser 17 ist die optimale Position der Wendeschneidplatten 1 in Bezug auf die zu bearbeitende Oberfläche O angegeben, wenn ein Einstellwinkel γ = (0 ± 1)° und ein Neigungswinkel δ = (5 ± 3)° erreicht ist (Fig. 3 bzw. 4). Der Wert des Einstellwinkels γ wird dabei maßgeblich durch die Form des Anschliffs der Flächenabschnitte 4a, 4b der Wendeschneidplatten 1 und damit von der Form der Schneidkante 5 bestimmt. Der Einstellwinkel γ kann jedoch bei verschiedenen Formen dieses Anschliffs auch variieren.

Der gemäß Fig. 1 mit einer Vielzahl von am Messerkopf-Umfang des Werkzeugträgers 16 verteilt angeordneten Wendeschneidplatten 1 versehene Schlichtfräser 17 weist zwischen benachbarten Wendeschneidplatten 1 Spanmulden 18 zur Abführung von bei der spanenden Bearbeitung eines Werkstücks bzw. einer Oberfläche O anfallendem Span auf. Die Wendeschneidplatten 1 sind dabei unter einem Freiwinkel ε = 7° angeordnet, so dass sich in Verbindung mit einem dem Winkel α entsprechenden Keilwinkel η = 77° ein Spanwinkel φ = 6° ergibt.

Wie insbesondere aus Fig. 2 ersichtlich ist, ist die im Bereich der Mittellinie M des Werkzeugträgers 16 vorgesehene Wendeschneidplatte 1 derart angeordnet, dass diese im Fräswerkzeug 17 um einen Versatzwinkel ϕ = (5 ± 3)° versetzt vor der Mittellinie M liegt. In Verbindung mit diesem Versatz der jeweiligen Wendeschneidplatte 1 mit deren geometrischer Form gemäß den Figuren 6 und 7 wird eine Vergrößerung des Radius der Schneidkante 5 und damit eine besonders hohe Oberflächengüte bei der spanenden Bearbeitung mittels des Fräswerkzeugs 17 erzielt.

Durch die Balligkeit, d.h. die gewölbte Kegelmantelfläche 4a der jeweiligen Seitenfläche 4 der Wendeschneidplatten 1 werden Toleranzen der den Werkzeugträger 17 treibenden Spindel ausgeglichen. Dadurch wiederum wird vermieden, dass eine Ecke der Schneidkante 5 bevorzugt am Werkstück anliegt, dessen Oberfläche O zu bearbeiten ist. Zudem wird mit dieser Anordnung und dieser Grundform der Schneidplatte 1 eine um etwa die Hälfte verringerte Wellen- und Profiltiefe und damit eine um einen Faktor zwei verbesserte Rillen- bzw. Riefenfreiheit der zu bearbeitenden Oberfläche O erzeugt.

Innerhalb des Fräswerkzeugs 17 bilden die je Wendeschneidplatte 1 umfangsseitig vier kegelmantelförmigen Flächenabschnitte, deren konvexe Krümmung die Krümmung der Schneidkante 5 erzeugen, die Spanfläche der Hauptschneide und teilweise die Freifläche der Nebenschneide. Dagegen weisen diese kegelmantelförmigen Flächenabschnitte 4a keine Funktion als Anlagefläche im in Fig. 5 dargestellten Plattensitz 20 auf.

Bei dem Werkzeugträger 16 sind besondere Maßnahmen zur Gewährleistung der notwendigen Exaktheit der Positionierung der Schneidkante 5 vorgesehen. Die Position der Schneidkante 5 in Bezug auf die zu bearbeitende Oberfläche O wird im Werkzeugträger 16 im Wesentlichen durch die Position des Plattensitzes 20 in Bezug zur Anlagefläche 21 und zur Aufnahmebohrung 22 des Werkzeugträgers 16 bestimmt (Fig. 3). Ein weiterer bestimmender Faktor ist die geometrische Exaktheit der Bezugsflächen, d.h. der der jeweiligen Grundfläche 3 zugewandten Auflagefläche 23 und der der jeweiligen Seitenfläche 4 zugewandten Anlagefläche 24 des Plattensitzes 20 (Fig. 4 und 5). Die geometrische Form des Plattensitzes 20 sowie die Genauigkeit hinsichtlich der Fertigung ist dabei an eine möglichst geringe Abweichung der geometrischen Parameter angepasst.

Wie insbesondere aus den Figuren 4 und 5 ersichtlich ist, findet bei dem dargestellten Plattensitz 20 ein gehärteter Stahlstift 25 als axialer Anschlag für die Wendeschneidplatte 1 Verwendung. Dazu ist der Plattensitz 20 im Bereich der Auflagefläche 23 mit einer entsprechenden Aufnahmeöffnung 26 für diesen Anschlagstift 25 versehen. Der Anschlagstift 25 wird erst nach der Bearbeitung der Auflage- oder Grundfläche 23 und der radialen Anlagefläche 24 montiert. Dabei ermöglicht die Gestaltungsform die Bearbeitung sowohl der Auflagefläche 23 als auch der radialen Anlagefläche 24 in einem einzigen Bearbeitungsschritt. Durch diese Vorgehensweise ist sichergestellt, dass eine Planlaufgenauigkeit von 10µm im Werkzeugträger 16 erzeugt werden kann. Die Rundlaufgenauigkeit der Wendeschneidplatten 1 zur Rotationsachse 27 (Fig. 3) des Fräswerkzeugs 17 wird maßgeblich durch die axiale Position des gehärteten Anlagestiftes 25 bestimmt. Die Abweichung zur Rotationsachse 27 soll dabei möglichst gering sein.

Wie in Fig. 1 dargestellt ist, weist der Werkzeugträger 16 am Werkzeugbund 28 umfangsseitig angeordnete Gewindebohrungen 29 auf, in die bei Bedarf insbesondere aus Stahl bestehende Gewindestifte 30 unterschiedlicher Länge eingeschraubt werden können. Mittels dieser Stifte 30 kann das Fräswerkzeug 17 auf eine Restunwucht von G 6.3 bei 10.000 Umdrehungen pro Minute (1/min) eingestellt werden. Hierdurch ist eine weitere Verbesserung der Oberflächenqualität erreichbar, indem Schwingungen und Vibrationen während der Bearbeitung verringert werden. Diese Schwingungen können durch die Verkleinerung der Unwucht des Fräswerkzeugs 17 gering gehalten werden. Damit wird zwangsläufig eine Verkleinerung der freien Massenkräfte und damit eine Verkleinerung der Auslenkungen des Werkzeugs unter deren Einfluss erreicht. Dieser Umstand wiederum wirkt sich positiv auf die Qualität und Güte der bearbeiteten Oberfläche O aus und führt zu einer besonders geringen Belastung der Antriebsspindel der Fräsmaschine, auf der das Fräswerkzeug 17 genutzt wird.

Der Fräsmesser- oder Schlichtmesserkopf des Werkzeugträgers 16 mit den doppelseitigen Wendeschneidplatten 1 mit jeweils vier Schneidkanten 5 zur Schlichtbearbeitung weist lagefixierte Wendeschneidplatten 1 auf, wobei die Position der Schneidkanten 5 zur Oberfläche O nach dem Fixieren nicht mehr veränderbar ist. Die jeweilige Wendeschneidplatte 1 wird dabei derart mit dem Werkzeugträger 16 verbunden, dass die Schneidkante 5 der Wendeschneidplatte 1 in der vorgegebenen Position in geeigneter Weise fixiert ist, so dass eine nachträgliche Verschiebung der Schneidkante 5 nicht mehr möglich ist. Dadurch ist eine Lageverschiebung der Wendeschneidplatte 1 in Bezug auf den Werkzeugträger 16 durch äußere Einflüsse praktisch ausgeschlossen.

## Patentansprüche

1. Fräswerkzeug (17) mit einer Anzahl von an einem Werkzeugträger (16) umfangsseitig verteilt angeordneten Schneidplatten (1) mit einem Grundkörper (2) mit gegenüberliegenden ebenen Grundfläche (3) sowie Seitenflächen (4), die jeweils einen kegelmantelförmigen Flächenabschnitt (4a) und einen planaren Flächenabschnitt (4b) aufweisen, wobei der kegelmantelförmige Flächenabschnitt (4a) und die diesem zugewandte Grundfläche (3) unter Bildung einer Schneidkante (5) zueinander in einem spitzen Winkel (α) stehen, wobei der planare Flächenabschnitt (4b) mit der gegenüberliegenden Grundfläche (3) einen stumpfen Winkel (β) bildet, und wobei die Schnittkanten (5) einen in der Ebene der Grundfläche (3) liegenden außermittigen bogenförmigen Verlauf aufweisen,
**dadurch gekennzeichnet,**
**dass** jeder Schneidplatte (1) ein Plattensitz (20) mit einer der jeweiligen Grundfläche (3) zugewandten Auflagefläche (23) und einer der jeweiligen Seitenfläche (4) zugewandten Anlagefläche (24) sowie mit einer Aufnahmeöffnung (26) zur Aufnahme eines als axialer Anschlag für die Schneidplatte (1) wirksamen Anschlagstiftes (25) zugeordnet ist.

2. Fräswerkzeug (17) nach Anspruch 1,
**dadurch gekennzeichnet,**
**dass** eine am Umfangsbereich der Mittellinie (M) des Werkzeugträgers (16) vorgesehene Schneidplatte (1) um einen Winkel von ϕ =(5 ± 3)° gegenüber der Mittellinie (M) versetzt angeordnet ist.

3. Fräswerkzeug (17) nach Anspruch 1 oder 2,
**dadurch gekennzeichnet,**
**dass** die Schneidplatten (1) unter einem Freiwinkel ε = 7° im Werkzeugträger (16) angeordnet sind, wobei sich in Verbindung mit einem Keilwinkel η = 77° ein Spanwinkel φ = 6° ergibt.

4. Fräswerkzeug (17) nach einem der Ansprüche 1 bis 3,
**dadurch gekennzeichnet,**
**dass** die Schneidplatte (1) einen rhombusförmigen Grundkörper (2) aufweist, dessen einander gegenüberliegenden Grundflächen (3) gegeneinander um einen Winkel kleiner 100° und größer 95°, vorzugsweise 97°, verdreht sind.

5. Fräswerkzeug (17) nach einem der Ansprüche 1 bis 4,
**gekennzeichnet durch** jeweils zwei zu jeder Grundfläche (3) der Schneidplatte (1) symmetrisch angeordnete Eckfasenflächen (9), deren jede mit einer der Grundflächen (3) und einer der Seitenflächen (4) jeweils einen stumpfen Winkel bildet, wobei die jeweilige Eckfasenfläche (9) mit dem kegelmantelförmigen Flächenabschnitt (4a) und mit dem planaren Flächenabschnitt (4b) sowie mit der der Schneidkante (5) abgewandten Grundfläche (3) jeweils einen stumpfen Winkel bildet.
